# DEMANDE DE BREVET EUROPEEN

(11) **EP 0 985 582 A1**
(43) Date de publication de la demande: **15.03.2000**
(21) Numéro de dépôt: 99402200.2
(22) Date de dépôt: 07.09.1999
(51) Int. Cl.: B60R 9/06, B60R 9/10

(54) **Dispositif pour fixer un porte-vélo à l'arrière d'une automobile**

(30) Priorité: 09.09.1998 FR 9811268
(71) Demandeur: AUTOMAXI INDUSTRIES, F-35400 Saint Malo (FR)
(72) Inventeur: Fourel, Pascal, 35400 Saint-Malo (FR)
(74) Mandataire: Somnier, Jean-Louis

(57) **Abrégé**

Le porte-vélo (1) permet de transporter un ou plusieurs vélos (4) transversalement à l'arrière de l'automobile (2).

Le dispositif pour fixer le porte-vélo (1) comprend une barre de toit (5) pouvant se fixer transversalement à l'arrière du toit (6) de l'automobile (2), un porte-vélo (1) constitué par un cadre rigide fixé à ladite barre de toit (5) et dont l'extrémité arrière (1a) opposée à la barre de toit (5) s'appuie sur la carrosserie à la partie inférieure (7) de l'arrière de l'automobile (2).

## Description

La présente invention concerne un dispositif pour fixer un porte-vélo à l'arrière d'une automobile et permettant de transporter un ou plusieurs vélos transversalement à l'arrière de l'automobile.

On connaît les porte-vélos arrières, fixés par sangles et crochets à l'arrière du véhicule. Dans les pays où ces produits sont autorisés, ils ont connu un développement important, surtout du fait de la mise en place des vélos beaucoup plus aisée que sur les porte-vélos de toits.

Par contre, ces porte-vélos à sangles présentent un certain nombre d'inconvénients : manque de fiabilité de l'accrochage (en particulier sur mauvaises routes), réglage par l'utilisateur aléatoire, risque d'endommager le véhicule. Ceci est particulièrement vrai pour les véhicules de plus en plus nombreux à hayon composite ou à spoiler intégré, et dans de nombreux cas, ces porte-vélos peuvent cacher plaque d'immatriculation et feux arrières, ce qui n'est conforme au Code de la Route dans aucun pays.

Certains clients recherchant l'aspect fonctionnel en sauvegardant la fiabilité en arrivent à poser un attelage sur leur véhicule puis fixent un dispositif porte-vélos sur l'attelage. Cette solution est bien sûr très coûteuse.

Le but de la présente invention est de proposer un dispositif garantissant une fixation du porte-vélo sûre et fiable, tout en étant économique et facile à monter sur l'automobile par l'utilisateur.

Suivant l'invention, le dispositif pour fixer un porte-vélo à l'arrière d'une automobile est caractérisé en ce qu'il comprend une barre de toit pouvant se fixer transversalement à l'arrière du toit de l'automobile, un porte-vélo constitué par un cadre rigide fixé à ladite barre de toit et dont l'extrémité arrière opposée à la barre de toit s'appuie sur la carrosserie à la partie inférieure de l'arrière de l'automobile.

Le fait que le porte-vélo soit fixé à une barre de toit elle-même fixée à l'arrière du toit garantit une fixation sûre et fiable du porte-vélo.

L'invention vise de préférence un dispositif utilisable pour fixer un ou plusieurs vélos à l'arrière d'une automobile du type break ou monospace comportant sur chacun des côtés du toit une barre de fixation longitudinale.

De préférence, ladite barre de toit comporte des moyens pour le fixer à l'extrémité arrière desdites barres de fixation longitudinales.

La fixation du porte-vélo à une barre transversale fixée aux barres de fixation longitudinales solidement ancrées au toit de l'automobile, garantit une fixation particulièrement solide et fiable.

Dans le cas des automobiles ne comportant pas de telles barres longitudinales, la barre transversale à laquelle est fixé le porte-vélo peut être fixée à chacune de ses extrémités à un élément de la carrosserie de l'automobile prévu à la partie supérieure de chaque côté de l'automobile.

De préférence, l'extrémité arrière du porte-vélo s'appuie sur la carrosserie par un ou plusieurs blocs en matière souple.

Le porte-vélo ne risque ainsi pas de détériorer la carrosserie du véhicule.

D'autres particularités et avantages de l'invention apparaîtront encore dans la description ci-après.

Aux dessins annexés donnés à titre d'exemples non limitatifs :
- la figure 1 est une vue de l'arrière d'une automobile auquel est fixé un porte-vélo conforme à l'invention ;
- la figure 2 est une vue partielle de côté de l'automobile représentée sur la figure 1, le porte-vélo portant un vélo ;
- la figure 3 est une vue en perspective partielle à plus grande échelle montrant une barre de toit fixée transversalement à l'arrière du toit de l'automobile et le détail de la fixation du porte-vélo à cette barre ;
- la figure 4 est une vue partielle de côté d'une automobile du type break dont le toit comporte des barres de fixation longitudinales auxquelles sont fixés une barre transversale et un porte-vélo ;
- la figure 5 est une vue analogue à la figure 4 montrant le hayon arrière de l'automobile en position ouverte ;
- la figure 6 est une vue en perspective partielle du toit de l'automobile représentée sur les figures 4 et 5, montrant le détail de la fixation de la barre transversale aux barres longitudinales et la fixation du porte-vélo à la barre transversale.

En référence aux figures annexées, le dispositif pour fixer un porte-vélo 1 à l'arrière d'une automobile 2, 3, permet de transporter un ou plusieurs vélos 4 transversalement à l'arrière de l'automobile 2, 3.

Conformément à l'invention, ce dispositif comprend une barre de toit 5 fixée transversalement à l'arrière du toit 6 de l'automobile 2, 3.

Le porte-vélo 1 est constitué par un cadre rigide fixé à la barre de toit 5.

L'extrémité arrière la du porte-vélo 1 opposée à la barre de toit 5 s'appuie sur la carrosserie à la partie inférieure 7 de l'arrière de l'automobile 2, 3.

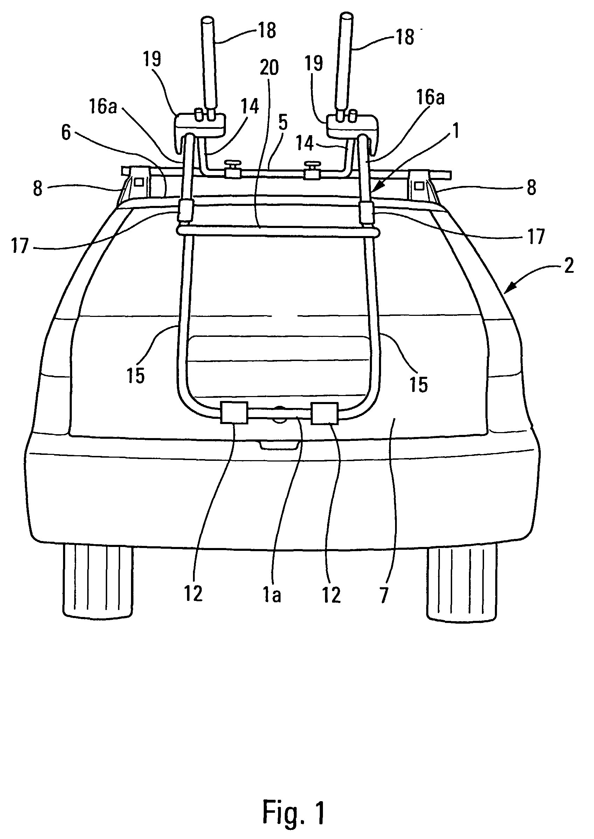

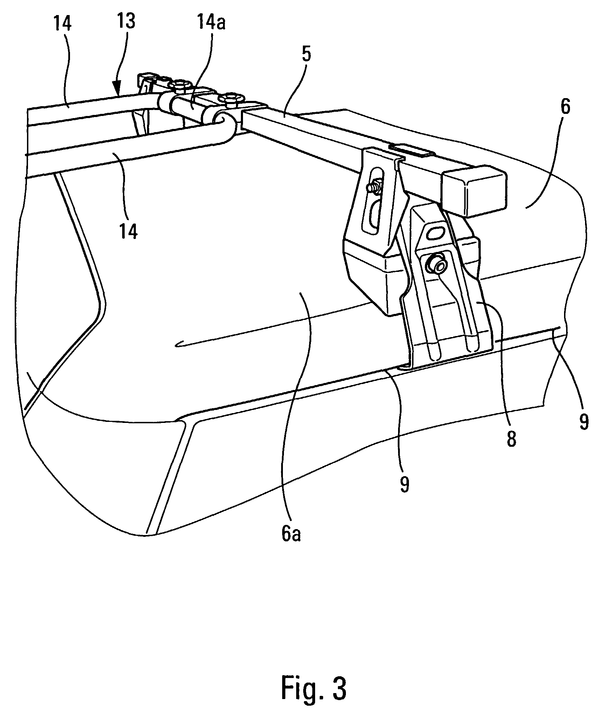

Dans le cas des figures 1 à 3, la barre de toit 5 comporte des organes 8 permettant de fixer chacune des extrémités de la barre 5 à un épaulement 9 (voir figure 3) prévu à la partie supérieure de chaque côté de l'automobile 2.

Dans d'autres types d'automobiles, la barre de toit 5 peut être fixée de chaque côté à des gouttières ou autres éléments de la carrosserie de l'automobile, prévus à la partie supérieure des côtés de l'automobile.

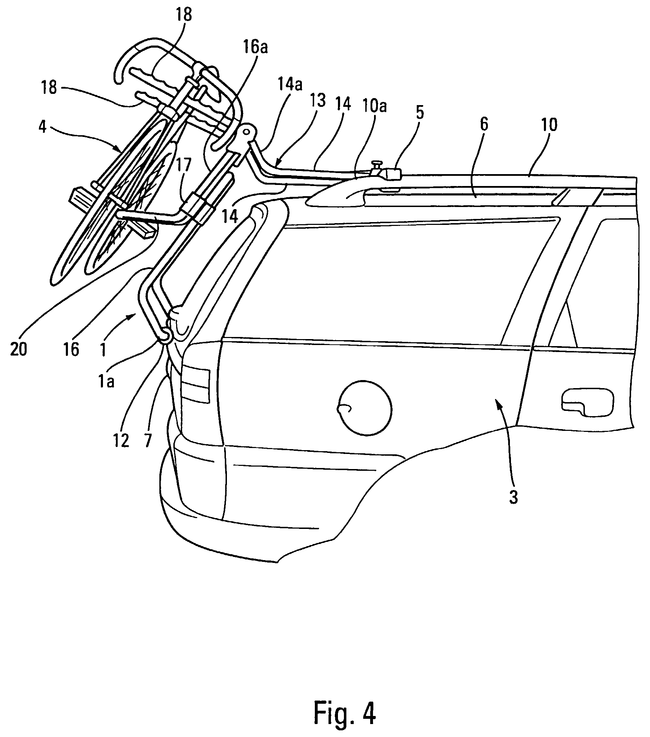

Dans l'exemple des figures 4 à 6 l'automobile 3 du type break comporte sur chacun des côtés du toit 6 une barre de fixation longitudinale 10 solidement ancrée à la carrosserie de l'automobile.

Cette barre de toit 5 comporte des organes 11 pour la fixer à l'extrémité arrière 10a des barres de fixation longitudinales 10.

Dans les deux exemples représentés, l'extrémité arrière 1a du porte-vélo 1 s'appuie sur la carrosserie par un ou plusieurs blocs 12 en matière souple (voir notamment les figures 1 et 4).

De façon plus précise, le porte-vélo 1 comprend une partie avant 13 constituée par deux bras 14 fixés à la barre de toit 5 et s'étendant au-dessus de la partie arrière 6a du toit 6.

Cette partie avant 13 est reliée à une partie arrière 15 qui comprend également deux bras 16 s'étendant à une certaine distance de la carrosserie arrière de l'automobile 2, 3.

L'extrémité arrière la du bras 16 prend appui sur la carrosserie.

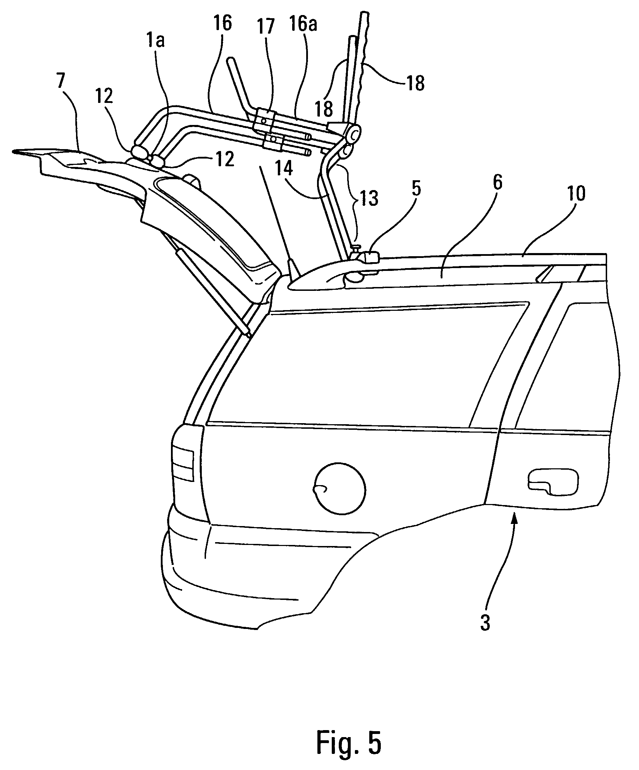

Par ailleurs, les deux bras 14 de la partie avant 13 sont reliés de façon articulée à la barre de toit 5 (voir notamment les figures 3 et 5).

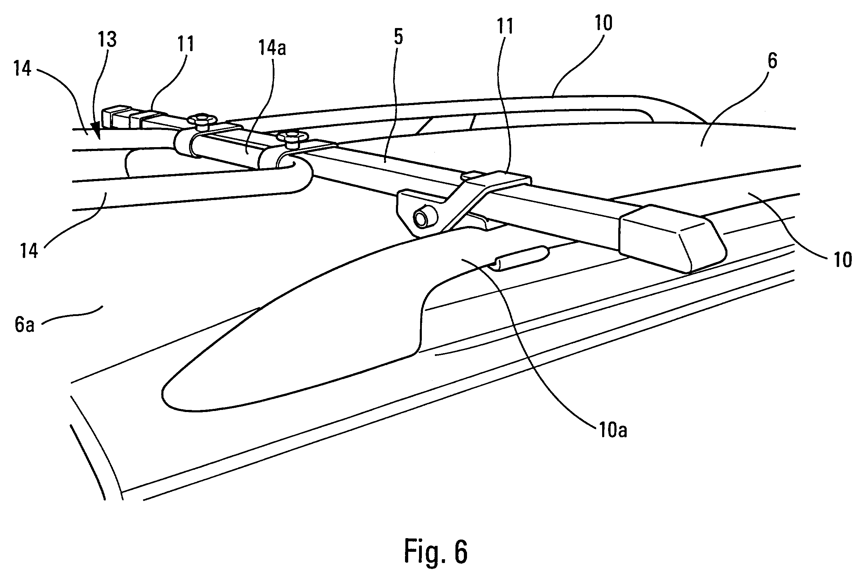

D'autre part, les deux bras 14 de la partie avant 13 et les deux bras 16 de la partie arrière 15 forment chacun un arceau dont l'élément transversal 14a, 1a est dans l'un des cas (voir figures 3 et 6) fixé à la barre de toit 5 et dans l'autre cas (voir figures 1 et 5) porte des blocs souples 12 en appui sur la carrosserie.

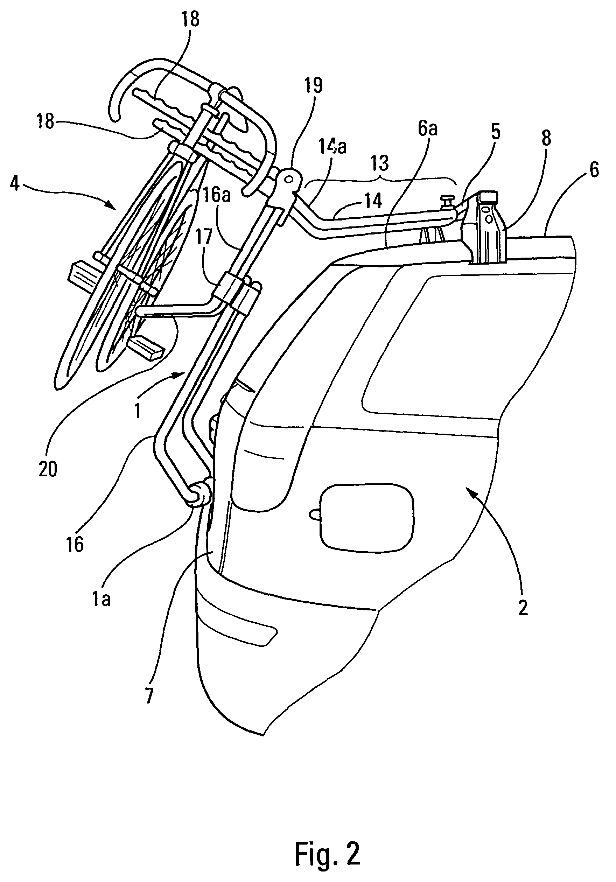

De plus, les deux bras 16 de la partie arrière 15 comprennent chacun (voir figures 2 et 4) deux éléments 16, 16a reliés ensemble par des organes 17 permettant de régler la longueur de la partie arrière 15.

On voit en outre notamment sur les figures 2 et 4, que les deux bras 14 de la partie avant 13 sont reliés aux deux bras 16a de la partie arrière 15 par une partie 14a inclinée vers le haut.

D'autre part, l'extrémité arrière 14a des deux bras 14 de la partie avant 13 porte chacune un bras de support 18 pour accrocher un ou plusieurs vélos 4.

Ces deux bras de support 18 sont fixés chacun, de façon articulée en 19 à l'extrémité arrière 14a des bras 14. Des moyens sont prévus pour bloquer ces bras de support 18 dans une position angulaire déterminée réglable.

Par ailleurs, les deux éléments de bras 16a qui constituent la partie supérieure de la partie arrière 15 du porte-vélo forment un arceau présentant une partie 20 repliée vers le haut (voir figures 2 et 4) dans une direction opposée à l'arrière de l'automobile.

L'arceau formé par cette partie repliée permet l'accrochage d'une pédale du vélo (voir en particulier la figure 2).

Le dispositif que l'on vient de décrire présente les principaux avantages suivants :
- la fixation du porte-vélo 1 à une barre de toit 5 solidement fixée à l'arrière du toit 6 de l'automobile garantit une fixation solide et fiable ;
- l'appui de la partie arrière du porte-vélo sur la carrosserie au moyen de blocs souples 12 évite tout risque de détérioration de la carrosserie ;
- le fait que l'on puisse régler la longueur de la partie arrière 15 du porte-vélo 1 permet d'adapter celui-ci à de nombreux types d'automobiles ;
- le fait que le porte-vélo 1 soit fixé de façon articulée à la barre de toit 5, permet d'ouvrir facilement le hayon arrière (voir figure 5), sans qu'il soit nécessaire de démonter le porte-vélo ;
- le porte-vélo 1 peut être monté facilement à l'arrière de l'automobile ; il suffit en effet de fixer la barre transversale 5 à l'arrière du toit, de fixer l'avant du porte-vélo 1 à cette barre 5, et éventuellement régler la longueur des bras 16, 16a de la partie arrière du porte-vélo.
- le porte-vélo peut supporter jusqu'à quatre vélos.

Bien entendu, l'invention n'est pas limitée à l'exemple que l'on vient de décrire et on peut apporter à celui-ci de nombreuses modifications sans sortir du cadre de l'invention.

## Revendications

1. Dispositif de support d'un vélo constitué d'un porte-vélo et de moyens de fixation à l'arrière d'une automobile (2, 3) et permettant de transporter un ou plusieurs vélos (4) transversalement à l'arrière de l'automobile, caractérisé en ce qu'il comprend une barre de toit (5) pouvant se fixer transversalement à l'arrière du toit (6) de l'automobile (2, 3), un porte-vélo (1) constitué par un cadre rigide fixé à ladite barre de toit (5) et dont l'extrémité arrière (1a) opposée à la barre de toit (5) s'appuie sur la carrosserie à la partie inférieure (7) de l'arrière de l'automobile (2, 3).

2. Dispositif conforme à la revendication 1 utilisable pour fixer un ou plusieurs vélos (4) à l'arrière d'une automobile (3) du type break comportant sur chacun des côtés du toit (6) une barre de fixation longitudinale (10), caractérisé en ce que ladite barre de toit (5) comporte des moyens (11) pour la fixer à l'extrémité arrière (10a) desdites barres de fixation longitudinales (10).

3. Dispositif conforme à la revendication 1, caractérisé en ce que ladite barre de toit (5) comporte des moyens (8) pour fixer chacune de ses extrémités à un élément (9) de la carrosserie de l'automobile prévu à la partie supérieure de chaque côté de cette automobile.

4. Dispositif conforme à l'une des revendications 1 à 3, caractérisé en ce que l'extrémité arrière (1a) du porte-vélo (1) s'appuie sur la carrosserie par un ou plusieurs blocs (12) en matière souple.

5. Dispositif conforme à l'une des revendications 1 à 4, caractérisé en ce que le porte-vélo (1) comprend une partie avant (13) constituée par deux bras (14) fixés à la barre de toit (5) et s'étendant au-dessus de la partie arrière (6a) du toit (6), cette partie avant (13) étant reliée à une partie arrière (15) comprenant également deux bras (16) s'étendant à une certaine distance de la carrosserie arrière de l'automobile (2, 3) et dont l'extrémité arrière (1a) prend appui sur ladite carrosserie.

6. Dispositif conforme à la revendication 5, caractérisé en ce que les deux bras (14) de la partie avant (13) sont reliés de façon articulée à la barre du toit (5).

7. Dispositif conforme à l'une des revendications 5 ou 6, caractérisé en ce que les deux bras (14) de la partie avant (13) et les deux bras (16) de la partie arrière (15) forment chacun un arceau dont l'élément transversal (14a, 1a) est dans l'un des cas fixé à la barre de toit (5) et dans l'autre cas porte des blocs souples (12) en appui sur la carrosserie.

8. Dispositif conforme à l'une des revendications 5 à 7, caractérisé en ce que les deux bras (16) de la partie arrière (15) comprennent chacun deux éléments (16a) reliés ensemble par des moyens (17) permettant de régler la longueur de ladite partie arrière (15).

9. Dispositif conforme à l'une des revendications 5 à 8, caractérisé en ce que les deux bras (14) de la partie avant (13) sont reliés aux deux bras (16a) de la partie arrière (15) par une partie (14a) inclinée vers le haut.

10. Dispositif conforme à l'une des revendications 5 à 9, caractérisé en ce que l'extrémité arrière (14a) des deux bras (14) de la partie avant (13) porte chacune un bras de support (18) pour accrocher un ou plusieurs vélos (4).

11. Dispositif conforme à la revendication 10, caractérisé en ce que les deux bras de support (18) sont fixés chacun de façon articulée à ladite extrémité arrière (14a), des moyens étant prévus pour bloquer lesdits bras de support (18) dans une position angulaire déterminée réglable.

12. Dispositif conforme à l'une des revendications 8 à 11, caractérisé en ce que les deux éléments de bras (16a) qui constituent la partie supérieure de ladite partie arrière (15) forment un arceau présentant une partie (20) repliée vers le haut dans une direction opposée à l'arrière de l'automobile.

13. Porte-vélo fixé à l'arrière d'une automobile (2, 3) au moyen du dispositif selon l'une des revendications 1 à 12.
